# EUROPÄISCHE PATENTSCHRIFT

(11) **EP 0 910 841 B1**
(45) Veröffentlichungstag und Bekanntmachung des Hinweises auf die Patenterteilung: **15.03.2000**
(21) Anmeldenummer: 96922838.6
(22) Anmeldetag: 19.06.1996
(51) Int. Cl.: G07F 7/10

(54) **INFORMATIONSÜBERMITTLUNGSSYSTEM**
INFORMATION TRANSMISSION SYSTEM
SYSTEME DE TRANSMISSION D'INFORMATIONS

(43) Veröffentlichungstag der Anmeldung: 28.04.1999
(73) Patentinhaber: Tresor TV Produktions GmbH, 85774 Unterföhring (DE)
(72) Erfinder: ROOST, Holger, D-85737 Ismaning (DE); WILHELM, Siegfried, D-81373 München (DE)
(74) Vertreter: Schmidt, Steffen J., Dipl.-Ing.
(86) Internationale Anmeldenummer: EP9602646
(87) Internationale Veröffentlichungsnummer: WO9749071

(56) Entgegenhaltungen:
- EP-A- 0 193 920
- EP-A- 0 355 372
- EP-A- 0 707 290
- WO-A-95/04328
- DE-A- 3 435 697
- GB-A- 2 274 523
- US-A- 5 367 571

## Beschreibung

Die Erfindung betrifft ein Informationsübermittlungssystem zum Übermitteln von Information zwischen wenigstens einem Nutzer eines Datennetzes durch ein mit dem Datennetz in Kommunikationsverbindung bringbares Endgerät des Nutzers und einem in dem Datennetz verfügbaren Hostrechner.

Für derartige Informationsübermittlungssysteme sind im Stand der Technik Endgeräte in Form von Datenterminals oder Personal Computern (PC) bekannt, die mittels eines Modems an das Telefonnetz angeschlossen sind und mit denen unter Verwendung spezieller Kommunikationssoftware einem Nutzer der Nachrichtenaustausch mit entfernten Rechnern (Hostrechnern) ermöglicht wird.

Allerdings sind die Risiken beim Einsatz derartiger Informationsübermittlungssysteme beispielsweise bei der Abwicklung von Bankgeschäften (Kontoführung, Geldüberweisung oder dergl.), Bestellungen von Waren oder Dienstleistungen bei Hostrechnern in dem Datennetz, etc. erheblich, da keinerlei Sicherheit bei der Übermittlung vertraulicher Daten (Bankverbindung, transferierter Geldbetrag, etc.) gewährleistet ist. Zwar können einzelne Nachrichtenübermittlungen in teilweise verschlüsselter Form ausgeführt werden. Bis jetzt existiert jedoch noch kein System, das dem unbefugten Angriff Dritter auf die vertraulichen Nachrichtenübermittlungen standhält. Insbesondere existiert kein realisiertes Konzept für die Kommunikation von Kunden einer Bank, eines Versandhandelshauses, etc. mit der Bank oder dem Versandhaus.

So ist aus GB-A-2 274 523 ein tragbares Gerät zur elektronischen Abbuchung einer Geldsumme von einem Guthaben bekannt (z.B. Bankkonto, Guthaben auf einer Geldkarte), dessen Höhe sowie weitere das Guthaben betreffende Daten auf einer mit einem IC-Modul versehenen Karte gespeichert sind. Um die erforderliche Sicherheit bei Datenübertragungen zu gewährleisten, werden Schlüssel verwendet, die vor Beginn einer Datenübertragung von der IC-Karte an ein Endgerät übertragen und dort überprüft werden, und nach Datenübertragungen von dem Endgerät erneuert und an die IC-Karte zurückübermittelt werden.

Eine weitere, ebenfalls zur Kommunikation zwischen einer IC-Karte und einem Mikrocomputer entworfene Einrichtung wird in WO-A-9504328 offenbart. Der Mikrocomputer weist hier einen internen Speicherbereich auf, in den von der IC-Karte oder einem Zentralrechner Programmdaten geladen werden, wobei diese Programmdaten nach einer Aktivierung über eine Benutzungsschnittstelle ausgeführt werden.

Des weiteren wird in DE-A-34 35 697 ein elektrisches Gerät beschrieben, dessen umprogrammierbare Funktionsmerkmale in einem internen elektronischen Funktionsspeicher gespeichert sind und durch Verwendung einer Codierkarte (IC-Karte) mit einem fest programmierbaren Codierspeicher, in dem die die gewünschten Funktionsmerkmale definierenden Daten vorliegen, umprogrammiert werden können. Die Verwendung unterschiedlicher Codierkarten erlaubt eine individuelle Verschlüsselung von Datenübertragungen zwischen dem elektrischen Gerät und anderen Geräten eines Informationsübermittlungssystems.

In vergleichbarer Weise werden bei dem gesteuerten Endgerät gemäß EP-A-0 355 372 tragbare Datenträger (z.B. IC-Karten, Smartcards, Steuerungsmodule) verwendet, um Datenaustauschoperationen zwischen den Datenträgern bzw. dem Endgerät und anderen Geräten eines Datenaustauschsystems durch kryptographische Verfahren zu schützen. Die Anwendung der kryptographischen Verfahren erfolgt innerhalb der tragbaren Datenträger, die die hierfür notwendigen geheimen Schlüssel in nicht flüchtigen Speicherbereichen speichern.

Schließlich wird in EP-A-0 193 920 ein IC-Kartensystem offenbart, bei dem Datenübertragungen geschützt werden, indem das System auf einer IC-Karte vorliegende Schlüssel bzw. von einem Benutzer eingegebene Schlüssel überprüft und bei einer erfolgreichen Überprüfung der Schlüssel dem Benutzer den Zugriff auf das System ermöglicht.

Der vorliegenden Erfindung liegt daher die Aufgabe zugrunde, ein derartiges Informationsübermittlungssystem bereitzustellen, das auf einfache und kostengünstige Weise für eine Vielzahl, auch gleichgearteter Nachrichtenübermittlungen eine Veränderung oder Kenntnisnahme der jeweiligen Nachricht durch unbefugte Dritte verhindert.

Zur Lösung dieser Aufgabe sind erfindungsgemäß in dem eingangs beschriebenen Nur-Lese-Speicherbereich das Informationsentschlüsselungsprogramm in unverschlüsselter Form und das Informationsübermittlungsprogramm sowie die weiteren Informationen in verschlüsselter Form abgespeichert, und die Rechnereinheit ist dazu eingerichtet, mit dem Informationsentschlüsselungsprogramm und einem Schlüssel das verschlüsselte Informationsübermittlungsprogramm und/oder die weiteren Informationen aus dem Nur-Lese-Speicherbereich in ein entschlüsseltes, ausführbares erstes Informationsübermittlungsprogramm bzw. entschlüsselte Informationen in dem Schreib/Lese-Speicherbereich zu überführen.

In einer besonders bevorzugten Ausführungsform der Erfindung sind die Speichereinrichtung und die Rechnereinheit als einheitliche Baugruppe ausgestaltet, vorzugsweise in einer Chip-karte angeordnet.

Außerdem ist die Rechnereinheit dazu eingerichtet, mit dem ersten Informationsübermittlungsprogramm Informationen aus dem Schreib/Lese-Speicherbereich (der Chipkarte) in einen Arbeitsspeicher des Endgerätes zu übermitteln.

Vorzugsweise weist die aus dem Schreib/Lese-Speicherbereich in den Arbeitsspeicher des Endgerätes zu übermittelnde Information ein Kommunikationsprogramm auf, das zur Übermittlung von Nachrichten zwischen dem Endgerät und dem Hostrechner über das Datennetz geeignet ist.

Für dieses Kommunikationsprogramm gibt es mehrere Möglichkeiten. Wenn der Speicherraum der Chipkarte groß genug ist, ein Kommunikationsprogramm mit allen Merkmalen aufzunehmen, die es benötigt, kann das Kommunikationsprogramm ein durch die Rechnereinheit des Endgerätes unmittelbar ausführbares Programm sein.

Alternativ dazu kann die aus dem Schreib/Lese-Speicherbereich in den Arbeitsspeicher des Endgerätes zu übermittelnde Information auch ein Informationsentschlüsselungsprogramm und ein verschlüsseltes Kommunikationsprogramm aufweisen, das mit dem Informationsentschlüsselungsprogramm und einem Schlüssel (PIN) in ein durch die Rechnereinheit des Endgerätes unmittelbar ausführbares Programm überführbar ist, das zur Übermittlung von Nachrichten zwischen dem Endgerät und dem Hostrechner über das Datennetz geeignet ist.

Eine dritte Möglichkeit besteht darin, daß die aus dem Schreib/Lese-Speicherbereich in den Arbeitsspeicher des Endgerätes zu übermittelnde Information ein durch die Rechnereinheit des Endgerätes ausführbares zweites Kommunikationsprogramm aufweist, das zur Kommunikation mit einer zweiten Speichereinrichtung geeignet ist, um Information aus der zweiten Speichereinrichtung in den Arbeitsspeicher des Endgerätes zu übertragen. Dies ermöglicht eine Trennung (und damit erhöhte Sicherheit) zwischen einzelnen Komponenten des Informationsübermittlungssystems.

In diesem Fall kann die aus dem Schreib/Lese-Speicherbereich in den Arbeitsspeicher des Endgerätes zu übermittelnde Information ein Informationsentschlüsselungsprogramm und ein verschlüsseltes Kommunikationsprogramm aufweisen, das mit dem Informations-entschlüsselungsprogramm und einem Schlüssel (PIN) in ein durch die Rechnereinheit des Endgerätes unmittelbar ausführbares Kommunikationsprogramm überführbar ist, das zur Kommunikation mit der zweiten Speichereinrichtung geeignet ist, um Information aus der zweiten Speichereinrichtung in den Arbeitsspeicher des Endgerätes zu übertragen.

In einer weniger sicherheitsrelevanten Umgebung kann bei dem erfindungsgemäßen Informationsübermittlungssystem auch die aus der zweiten Speichereinrichtung in den Arbeitsspeicher des Endgerätes zu übermittelnde Information ein durch die Rechnereinheit des Endgerätes unmittelbar ausführbares Kommunikationsprogramm überführbar sein, das zur Übermittlung von Nachrichten zwischen dem Endgerät und dem Hostrechner über das Datennetz geeignet ist.

Schließlich kann die aus der zweiten Speichereinrichtung in den Arbeitsspeicher des Endgerätes zu übermittelnde Information ein durch die Rechnereinheit des Endgerätes ausführbares Informationsentschlüsselungsprogramm sowie ein verschlüsseltes Kommunikationsprogramm aufweisen, das mit dem Informationsentschlüsselungsprogramm und einem Schlüssel (PIN) in ein durch die Rechnereinheit des Endgerätes unmittelbar ausführbares Kommunikationsprogramm überführbar ist, das zur Übermittlung von Nachrichten zwischen dem Endgerät und dem Hostrechner über das Datennetz geeignet ist.

Für alle vorgenannten Programme (in der Chipkarte, in der zweiten Speichereinrichtung oder in dem Endgerät) gilt, daß jedes Programm vor seiner Übertragung und/oder Ausführung auf seine Identität und Integrität geprüft wird.

Dies geschieht durch Vergleich seiner Länge, seiner Quersumme über seine gesamte Länge und/oder seiner Prüfsumme über seine gesamte Länge mit entsprechenden vorherbestimmten Werten, wobei die entsprechenden vorherbestimmten Werte in der ersten und/oder zweiten Speichereinrichtung vorzugsweise verschlüsselt abgespeichert sind.

Eine weitere Erhöhung der Sicherheit wird in der Weise gewährleistet, daß jedes Programm zu Beginn seiner Ausführung die vollständige Kontrolle aller wesentlichen Resourcen (Arbeitsspeicher löschen, Ein-Ausgabekanäle sperren, Unterbrechungsmechanismen initialisieren etc.) sicherstellt, die mit der das Programm ausführenden Rechnereinheit verbunden und/oder verbindbar sind.

Schließlich enthält jedes Programm des erfindungsgemäßen Informationsübermittlungssystems eine Befehlsabfolge, die sicherstellt, daß jedes Programm am Ende seiner Ausführung zumindest wesentliche Teile von sich selbst und/oder im Laufe seiner Ausführung gespeicherter Daten aus dem jeweiligen Arbeits- oder Schreib-Lese-Speicher löscht.

Um sicherzustellen, daß auch die Übertragung der Nachrichten zwischen dem Endgerät und dem Hostrechner nicht ohne weiteres für unbefugte Dritte zugänglich ist, übermittelt jedes zur Übermittlung von Nachrichten zwischen dem Endgerät und dem Hostrechner über das Datennetz geeignete Programm nur Nachrichten zwischen dem Endgerät und dem Hostrechner über das Datennetz, die über ihre gesamte Länge mit zumindest einem Schlüssel (PIN; TAN) verschlüsselt sind.

In einer weiteren besonders bevorzugten Ausführungsform der Erfindung ist die Speichereinrichtung als einheitliche Baugruppe, vorzugsweise in einer Chipkarte, ausgestaltet.

Weitere Eigenschaften, Vorteile und Merkmale des erfindungsgemäßen Informationsübermittlungssystems werden anhand der nachstehenden Beschreibung von Ausführungsbeispielen verdeutlicht.
- Fig. 1: zeigt ein Kommunikationsnetz und mögliche Angriffe Dritter auf in diesem Kommunikationsnetz übertragene Nachrichten.
- Fig. 2: zeigt ein Endgerät eines Nutzers des erfindungsgemäßen Informationsübermittlungssystems mit einer Chip-Karte und einer weiteren Speichereinrichtung.
- Fig. 2a: zeigt ein Endgerät eines Nutzers des erfindungsgemäßen Informationsübermittlungssystems mit einer Chip-Karte und einer weiteren Speichereinrichtung in einer gegenüber Fig. 2 abgewandelten Ausführungsform.
- Fig. 3a, 3b: zeigen unterschiedliche Ausgestaltungen des Endgerätes mit einer Chipkarte und ggf. einer zweiten Speichereinrichtung für das erfindungsgemäße Informationsübermittlungssystem.

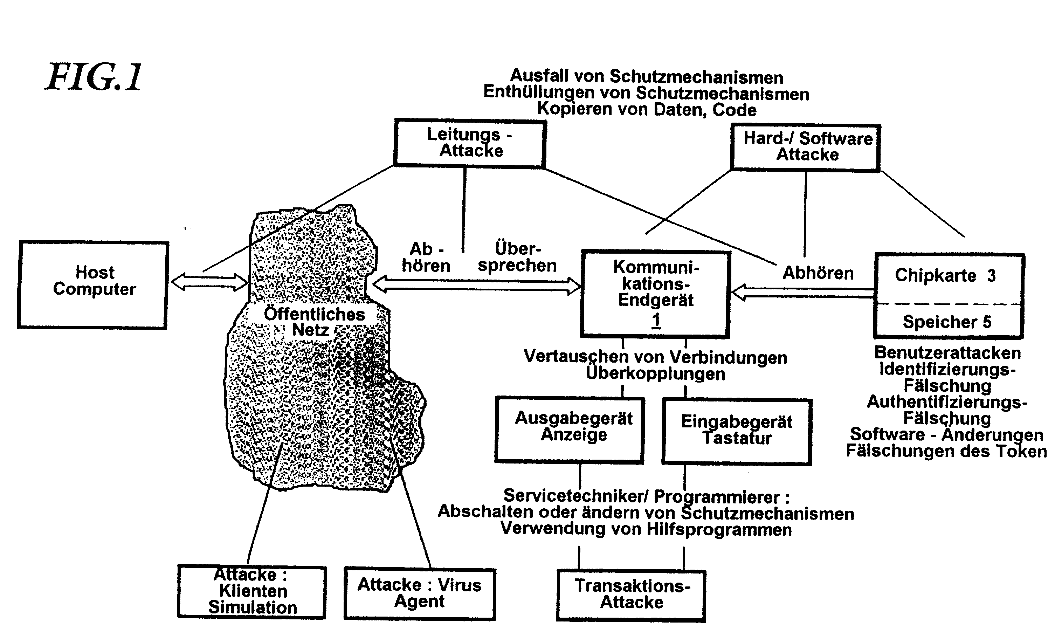

Fig. 1 veranschaulicht die Kommunikationswege zwischen einem Nutzer eines Datennetzes bzw. eines daran angeschlossenen Hostrechners über sein Endgerät und dem Hostrechner, sowie unterschiedliche Möglichkeiten von Angriffen unbefugter Dritter auf Nachrichten, die zwischen dem Endgerät des Nutzers und dem Hostrechner sowie anderen Komponenten des Endgerätes übermittelt werden.

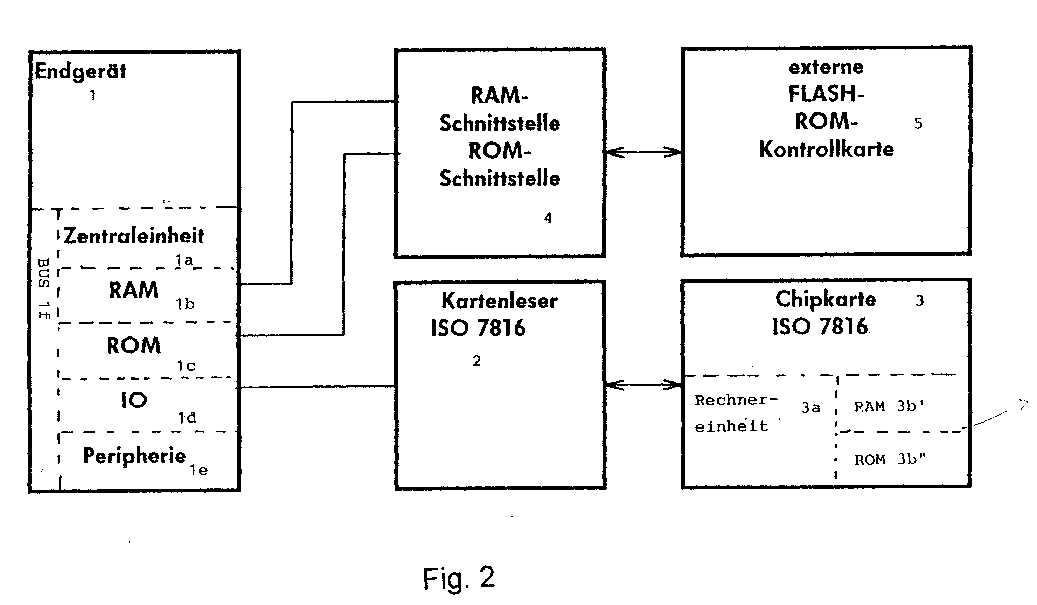

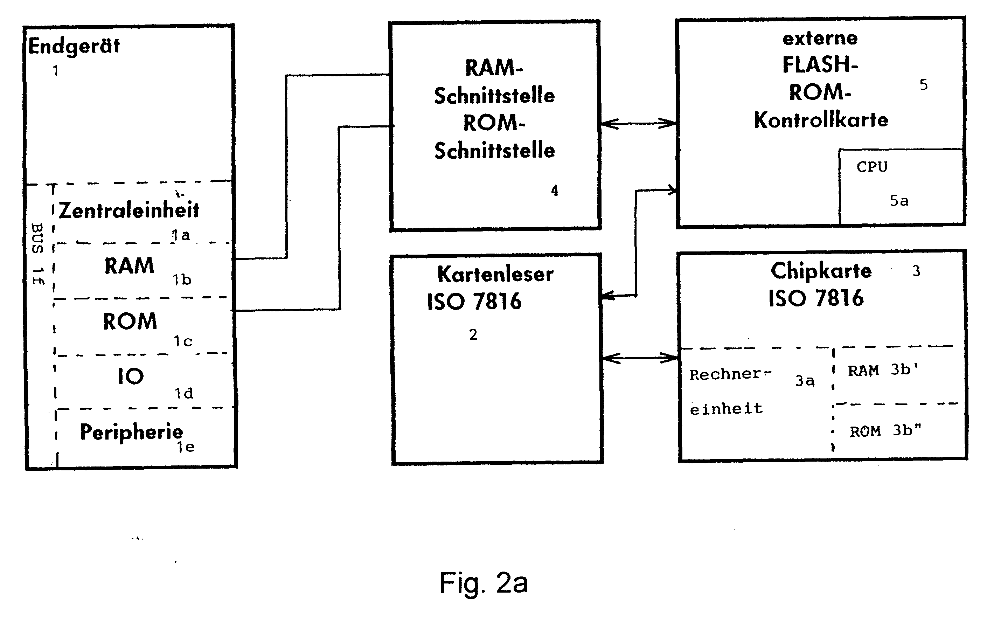

Fig. 2 zeigt die Komponenten einer Ausführungsform des erfindungsgemäßen Informationsübermittlungssystems auf der Seite eines Nutzers, durch die sichergestellt ist, daß unbefugte Dritte nicht auf Nachrichten zwischen dem Endgerät des Nutzers und dem Hostrechner zugreifen können.

Fig. 2a zeigt die Komponenten einer gegenüber Fig. 2 alternativen Ausführungsform des erfindungsgemäßen Informationsübermittlungssystems auf der Seite einer Nutzers. Dabei ist die RAM/ROM-Schnittstelle 4 und die zweite Speichereinrichtung 5 Teil einer PCMIA-Karte, die darüber hinaus noch eine eigene Rechnereinheit (CPU 5A) aufweist. Diese CPU 5A wird durch ein in dem ROM 5 abgelegtes Programm zur Steuerung des Kartenlesers 2 verwendet, der seinerseits zur Kommunikation mit der Chip-Karte 3 geeignet ist.

Die nachfolgende Beschreibung der Funktionsweise der Anordnung gemäß Fig. 2 ist entsprechend auf die Ausgestaltung gemäß Fig. 2a anpaßbar.

Ein Endgerät 1 (in Form eines PC oder dergl.) eines Nutzers weist eine Zentraleinheit 1a, einen Schreib-Lese-Speicher (RAM) 1b, einen Nur-Lese-Speicher (ROM) 1c, Ein/Ausgabeanschlüsse (IO) 1d, sowie nicht weiter veranschaulichte Peripheriegeräte 1e (Bildschirm, Tastatur, Maus, Disketten- und Festplattenlaufwerke) auf. Die Komponenten 1a - 1e sind über einen BUS 1f miteinander verbunden. Mittels eines an das Endgerät 1 angeschlossenen Chipkartenlesers 2 gemäß ISO 78 16,2,3 kann Datenaustausch mit einer Chipkarte 3 erfolgen. Die Chipkarte 3 weist eine Rechnereinheit 3a sowie eine mit dieser verbundene erste Speichereinrichtung 3b auf. Die erste Speichereinrichtung 3b ist in einen Schreib/Lese-Speicherbereich (RAM, Flash ROM) 3b' und einen Nur-Lese-Speicherbereich (ROM) 3b" unterteilt. Über eine an das Endgerät 1 angeschlossene RAM/ROM-Schnittstelle 4 kann eine zweite Speichereinrichtung 5 gelesen und/oder beschrieben werden. In der gezeigten Ausführungsform ist die zweite Speichereinrichtung eine FLASH-ROM-Karte 5.

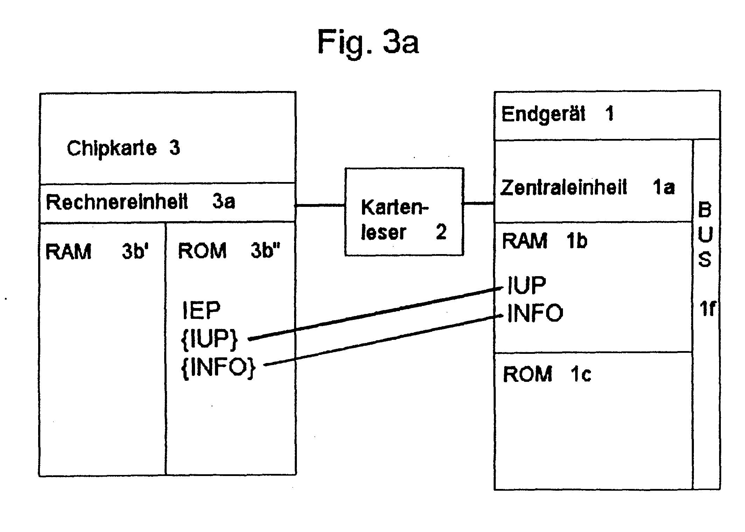

Die erste Speichereinrichtung 3b ist zur Aufnahme von Programmen und Daten eingerichtet. Die Programme sind in dem Nur-Lese-Speicherbereich (ROM) 3b" gespeichert und umfassen ein Informationsübermittlungsprogramm IUP, ein Informationsentschlüsselungsprogramm IEP. Darüberhinaus sind weitere Informationen INFO (Daten, Schlüssel, Verifizierungsinformation etc.) in der Speichereinrichtung 3b enthalten. Die Rechnereinheit 3a führt auf einen entsprechenden Befehl von außen das Informationsübermittlungsprogramm IUP aus, mit dem das Informationsentschlüsselungsprogramm IEP und die weiteren Informationen INFO an das Endgerät 1 übermittelt werden. In dem Endgerät 1 werden das Informationsentschlüsselungsprogramm IEP und die weiteren Informationen INFO im Arbeitsspeicher (RAM) 1b abgelegt. Das Informationsentschlüsselungsprogramm IEP ist in dem Nur-Lese-Speicher (ROM) 3b" in unverschlüsselter Form, und das Informationsübermittlungsprogramm {IUP} sowie die weiteren Informationen {INFO} in verschlüsselter Form abgespeichert. Bei der Übertragung aus dem Nur-Lese-Speicher (ROM) 3b" der Chipkarte 3 in den Arbeitsspeicher (RAM) 1b werden das Informationsübermittlungsprogramm {IUP} sowie die weiteren Informationen {INFO} in ein durch die Rechnereinheit la des Endgerätes 1 ausführbares Informationsübermittlungsprogramm IUP bzw. weiterverwendbare Informationen INFO (Daten, weitere Programme) überführt (siehe Fig. 3a).

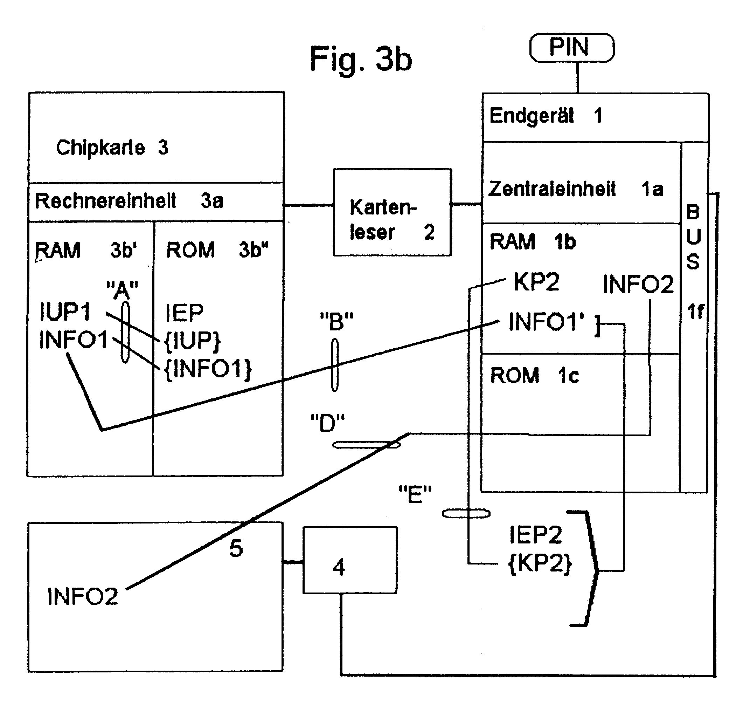

Alternativ dazu kann die Rechnereinheit 3a der Chipkarte 3 auch dazu eingerichtet sein, mit dem Informationsentschlüsselungsprogramm IEP und einem z.B. in das Endgerät 1 über dessen Tastatur eingegebenen und von dort an die Chipkarte weitergegebenen Schlüssel (PIN) das verschlüsselte Informationsübermittlungsprogramm {IUP} und/oder die weiteren Informationen {INFO} aus dem Nur-Lese-Speicherbereich 3b" in ein entschlüsseltes, durch die Rechnereinheit 3a der Chipkarte 3 ausführbares erstes Informationsübermittlungsprogramm IUP1 bzw. entschlüsselte Informationen INFO1 in dem Schreib/Lese-Speicherbereich 3b' in der Chipkarte 3 zu überführen (siehe "A" in Fig. 3b).

In diesem Fall ist die Rechnereinheit 3a der Chipkarte 3 dazu eingerichtet, mit dem ersten Informationsübermittlungsprogramm IUP1 Informationen INFO1' (Daten und/oder Programme) aus dem Schreib/ Lese-Speicherbereich 3b' oder dem Nur-Lese-Speicherbereich 3b" der Chipkarte 3 in einen Arbeitsspeicher (RAM) 1b des Endgerätes 1 zu übermitteln (siehe "B" in Fig. 3b).

Die in den Arbeitsspeicher (RAM) 1b des Endgerätes 1 zu übermittelnde Information INFO1' enthält ein Kommunikationsprogramm KP, das zur Übermittlung von Nachrichten N zwischen dem Endgerät 1 und dem Hostrechner über das Datennetz geeignet ist. Das Kommunikationsprogramm KP ist entweder ein durch die Rechnereinheit la des Endgerätes 1 unmittelbar ausführbares Programm, oder die in den Arbeitsspeicher 1b des Endgerätes 1 zu übermittelnde Information INFO1' weist ein Informationsentschlüsselungsprogramm IEP2 und ein verschlüsseltes Kommunikationsprogramm {KP1} auf, das mit dem Informationsentschlüsselungsprogramm IEP2 und einem Schlüssel (PIN) in ein durch die Rechnereinheit la des Endgerätes 1 unmittelbar ausführbares Programm überführbar ist, um Nachrichten N zwischen dem Endgerät 1 und dem Hostrechner über das Datennetz übermitteln zu können (siehe "C" in Fig. 3b).

Alternativ dazu kann die in den Arbeitsspeicher 1b des Endgerätes 1 zu übermittelnde Information INFO1' auch ein durch die Rechnereinheit 1a des Endgerätes 1 ausführbares zweites Kommunikationsprogramm KP2 aufweisen, das zur Kommunikation mit der zweiten Speichereinrichtung 5 geeignet ist, um ggf. auch verschlüsselte Information INFO2 aus der zweiten Speichereinrichtung 5 in den Arbeitsspeicher 1b des Endgerätes 1 zu übertragen (siehe "D" in Fig. 3b).

In einer alternativen Ausführungsform weist die in den Arbeitsspeicher 1b des Endgerätes 1 zu übermittelnde Information INFO1' ein Informationsentschlüsselungsprogramm IEP2 und ein verschlüsseltes Kommunikationsprogramm {KP2} auf, das mit dem Informationsentschlüsselungsprogramm IEP2 und einem Schlüssel (PIN) in ein durch die Rechnereinheit la des Endgerätes 1 unmittelbar ausführbares Kommunikationsprogramm KP2 überführbar ist, das zur Kommunikation mit der zweiten Speichereinrichtung 5 geeignet ist, um Information INFO2 aus der zweiten Speichereinrichtung 5 in den Arbeitsspeicher 1b des Endgerätes 1 zu übertragen (siehe "E" in Fig. 3b).

Die aus der zweiten Speichereinrichtung 5 in den Arbeitsspeicher la des Endgerätes 1 zu übermittelnde Information INFO2 kann ein durch die Rechnereinheit 1a des Endgerätes 1 unmittelbar ausführbares Kommunikationsprogramm KP3 (sowie weitere Informationen (Programme und/oder Daten)) sein, das zur Übermittlung von Nachrichten zwischen dem Endgerät 1 und dem Hostrechner über das Datennetz geeignet ist.

Alternativ dazu kann die aus der zweiten Speichereinrichtung 5 in den Arbeitsspeicher 1b des Endgerätes 1 zu übermittelnde Information INFO2 ein durch die Rechnereinheit des Endgerätes ausführbares Informationsentschlüsselungsprogramm IEP3 sowie ein verschlüsseltes Kommunikationsprogramm {KP3} aufweisen (sowie weitere Informationen (Programme und/oder Daten)), das mit dem Informationsentschlüsselungsprogramm IEP3 und einem Schlüssel (PIN) in ein durch die Rechnereinheit 1a des Endgerätes 1 unmittelbar ausführbares Kommunikationsprogramm KP3 überführbar ist, das zur Übermittlung von Nachrichten zwischen dem Endgerät 1 und dem Hostrechner über das Datennetz geeignet ist.

Aus Sicherheitsgründen wird jedes Programm vor seiner Übertragung und/oder Ausführung auf seine Identität und Integrität geprüft. Die Prüfung auf Identität und Integrität jedes Programms erfolgt durch Vergleich seiner Länge, seiner Quersumme über seine gesamte Länge und/oder seiner Prüfsumme über seine gesamte Länge mit entsprechenden vorherbestimmten Werten, wobei die entsprechenden vorherbestimmten Werte in der ersten und/oder zweiten Speichereinrichtung 3b'', 5 vorzugsweise verschlüsselt abgespeichert sind. Außerdem stellt jedes Programm zu Beginn seiner Ausführung die vollständige Kontrolle aller wesentlichen Resourcen sicher, die mit der das Programm ausführenden Rechnereinheit verbunden und/oder verbindbar sind. Schließlich löscht jedes Programm am Ende seiner Ausführung zumindest wesentliche Teile von sich selbst und/oder im Laufe seiner Ausführung gespeicherter Daten aus dem jeweiligen Arbeits- oder Schreib-Lese-Speicher 1b, 3b'.

Die durch die Kommunikationsprogramme erstellten oder empfangenen Nachrichten sind vollständig verschlüsselt. Dies geschieht mittels DES (Data Encryption Standard) oder RSA, wobei jedes zur Übermittlung von Nachrichten zwischen dem Endgerät und dem Hostrechner über das Datennetz geeignete Programm nur Nachrichten zwischen dem Endgerät und dem Hostrechner über das Datennetz übermittelt, die mit zumindest einem Schlüssel (PIN; TAN) verschlüsselt sind.

Durch das erfindungsgemäße Informationsübermittlungssystem werden unter anderem folgende Forderungen erfüllt:
1. Die Sicherheit der Informationsübermittlung muß unabhängig von der beim (End-)Nutzer vorhandenen Endgerät-Hardware und Endgerät-Software sein oder zumindest auf einfache Weise an die jeweiligen Gegebenheiten anpaßbar sein.
2. Die Chipkarte oder jede andere entsprechende Komponente mit der Rechnereinheit und/oder der Speichereinrichtung muß dem Nutzer einfach zur Verfügung gestellt werden können.
3. Die Informationsübermittlung oder die Verschlüsselung der Nachrichten soll auch von dem Hostrechner aus gesteuert werden können. Dies bedeutet, daß die Verschlüsselungsprogramme und/oder die Übermittlungsprogramme, und/oder weitere Informationen (Schlüssel, Referenzwerte oder dergl.) auch in verschlüsselter Form an das Endgerät über das Datennetz übertragen und in der Chipkarte oder der Speichereinrichtung abgelegt werden können. Damit kann sichergestellt werden, daß Programme oder Schlüssel (PIN, TAN) ggf. Nur einmal verwendet werden. Dies stellt eine zusätzliche Sicherheit gegen unbefugte Dritte dar.

## Patentansprüche

1. Informationsübermittlungssystem zum Übermitteln von Information zwischen wenigstens einem Nutzer eines Datennetzes durch ein mit dem Datennetz in Kommunikationsverbindung bringbares Endgerät (1) des Nutzers und einem in dem Datennetz verfügbaren Hostrechner, mit
- einer ersten Speichereinrichtung (3b',3b") zur Aufnahme von wenigstens einem Programm und/oder Daten, wobei
-- in der ersten Speichereinrichtung (3b', 3b")
--- ein Informationsübermittlungsprogramm (IUP),
--- ein Informationsentschlüsselungsprogramm (IEP), sowie
--- weitere Informationen (INFO) enthalten sind, und
- einer mit dem Endgerät (1) verbindbaren Rechnereinheit (3a), die zum Zugriff auf die erste Speichereinrichtung (3b', 3b") eingerichtet ist, um wenigstens das Informationsübermittlungsprogramm (IUP) auszuführen, mit dem das Informationsentschlüsselungsprogramm (IEP) und/oder die weiteren Informationen (INFO) an das Endgerät (1) übermittelt werden,
- die Speichereinrichtung einen Schreib/Lese-Speicherbereich (3b') und einen Nur-Lese-Speicherbereich (3b") aufweist, wobei die Rechnereinheit (3a) zum Zugriff auf beide Speicherbereiche eingerichtet ist,
dadurch gekennzeichnet, daß
- in dem Nur-Lese-Speicherbereich (3b") das Informations-entschlüsselungsprogramm (IEP) in unverschlüsselter Form, und das Informationsübermittlungsprogramm ({IUP}) sowie die weiteren Informationen ({INFO}) in verschlüsselter Form abgespeichert sind, und
- die Rechnereinheit (3a) dazu eingerichtet ist, mit dem Informationsentschlüsselungsprogramm (IEP) und einem Schlüssel (PIN) das verschlüsselte Informationsübermittlungsprogramm ({IUP}) und/oder die weiteren Informationen ({INFO}) aus dem Nur-Lese-Speicherbereich (3b") in ein entschlüsseltes, ausführbares erstes Informationsübermittlungsprogramm (IUP) bzw. entschlüsselte Informationen (INFO) in dem Schreib/Lese-Speicherbereich (3b') zu überführen.

2. Informationsübermittlungssystem nach Anspruch 1, dadurch gekennzeichnet, daß die Speichereinrichtung (3b',3b") und die Rechnereinheit (3a) als einheitliche Baugruppe, vorzugsweise in einer Chipkarte ausgestaltet sind.

3. Informationsübermittlungssystem nach Anspruch 1 oder 2, dadurch gekennzeichnet, daß die Rechnereinheit dazu eingerichtet ist, mit dem ersten Informationsübermittlungsprogramm Informationen aus dem Schreib/Lese-Speicherbereich in einen Arbeitsspeicher des Endgerätes zu übermitteln.

4. Informationsübermittlungssystem nach Anspruch 3, dadurch gekennzeichnet, daß die aus dem Schreib/Lese-Speicherbereich in den Arbeitsspeicher des Endgerätes zu übermittelnde Information ein Kommunikationsprogramm aufweist, das zur Übermittlung von Nachrichten zwischen dem Endgerät und dem Hostrechner über das Datennetz geeignet ist.

5. Informationsübermittlungssystem nach Anspruch 4, dadurch gekennzeichnet, daß das Kommunikationsprogramm ein durch die Rechnereinheit des Endgerätes unmittelbar ausführbares Programm ist.

6. Informationsübermittlungssystem nach Anspruch 3, dadurch gekennzeichnet, daß die aus dem Schreib/Lese-Speicherbereich in den Arbeitsspeicher des Endgerätes zu übermittelnde Information ein Informations-entschlüsselungsprogramm und ein verschlüsseltes Kommunikationsprogramm aufweist, das mit dem Informationsentschlüsselungsprogramm und einem Schlüssel (PIN) in ein durch die Rechnereinheit des Endgerätes unmittelbar ausführbares Programm überführbar ist, das zur Übermittlung von Nachrichten zwischen dem Endgerät und dem Hostrechner über das Datennetz geeignet ist.

7. Informationsübermittlungssystem nach Anspruch 3, dadurch gekennzeichnet, daß die aus dem Schreib/Lese-Speicherbereich in den Arbeitsspeicher des Endgerätes zu übermittelnde Information ein durch die Rechnereinheit des Endgerätes ausführbares zweites Kommunikationsprogramm aufweist, das zur Kommunikation mit einer zweiten Speichereinrichtung geeignet ist, um Information aus der zweiten Speichereinrichtung in den Arbeitsspeicher des Endgerätes zu übertragen.

8. Informationsübermittlungssystem nach Anspruch 3, dadurch gekennzeichnet, daß die aus dem Schreib/Lese-Speicherbereich in den Arbeitsspeicher des Endgerätes zu übermittelnde Information ein Informationsentschlüsselungsprogramm und ein verschlüsseltes Kommunikationsprogramm aufweist, das mit dem Informationsentschlüsselungsprogramm und einem Schlüssel (PIN) in ein durch die Rechnereinheit des Endgerätes unmittelbar ausführbares Kommunikationsprogramm überführbar ist, das zur Kommunikation mit der zweiten Speichereinrichtung geeignet ist, um Information aus der zweiten Speichereinrichtung in den Arbeitsspeicher des Endgerätes zu übertragen.

9. Informationsübermittlungssystem nach Anspruch 7, dadurch gekennzeichnet, daß die aus der zweiten Speichereinrichtung in den Arbeitsspeicher des Endgerätes zu übermittelnde Information ein durch die Rechnereinheit des Endgerätes unmittelbar ausführbares Kommunikationsprogramm ist, das zur Übermittlung von Nachrichten zwischen dem Endgerät und dem Hostrechner über das Datennetz geeignet ist.

10. Informationsübermittlungssystem nach Anspruch 7, dadurch gekennzeichnet, daß die aus der zweiten Speichereinrichtung in den Arbeitsspeicher des Endgerätes zu übermittelnde Information ein durch die Rechnereinheit des Endgerätes ausführbares Informationsentschlüsselungsprogramm sowie ein verschlüsseltes Kommunikationsprogramm aufweist, das mit dem Informationsentschlüsselungsprogramm und einem Schlüssel (PIN) in ein durch die Rechnereinheit des Endgerätes unmittelbar ausführbares Kommunikationsprogramm überführbar ist, das zur Übermittlung von Nachrichten zwischen dem Endgerät und dem Hostrechner über das Datennetz geeignet ist.

11. Informationsübermittlungssystem nach einem oder mehreren der vorhergehenden Ansprüche, dadurch gekennzeichnet, daß jedes Programm vor seiner Übertragung und/oder Ausführung auf seine Identität und Integrität geprüft wird.

12. Informationsübermittlungssystem nach Anspruch 11, dadurch gekennzeichnet, daß die Prüfung auf Identität und Integrität jedes Programms durch Vergleich seiner Länge, seiner Quersumme über seine gesamte Länge und/oder seiner Prüfsumme über seine gesamte Länge mit entsprechenden vorherbestimmten Werten erfolgt, wobei die entsprechenden vorherbestimmten Werte in der ersten und/oder zweiten Speichereinrichtung vorzugsweise verschlüsselt abgespeichert sind.

13. Informationsübermittlungssystem nach einem oder mehreren der vorhergehenden Ansprüche, dadurch gekennzeichnet, daß jedes Programm zu Beginn seiner Ausführung die vollständige Kontrolle aller wesentlichen Resourcen sicherstellt, die mit der das Programm ausführenden Rechnereinheit verbunden und/oder verbindbar sind.

14. Informationsübermittlungssystem nach einem oder mehreren der vorhergehenden Ansprüche, dadurch gekennzeichnet, daß jedes Programm am Ende seiner Ausführung zumindest wesentliche Teile von sich selbst und/oder im Laufe seiner Ausführung gespeicherter Daten aus dem jeweiligen Arbeits- oder Schreib-Lese-Speicher löscht.

15. Informationsübermittlungssystem nach einem oder mehreren der vorhergehenden Ansprüche, dadurch gekennzeichnet, daß jedes zur Übermittlung von Nachrichten zwischen dem Endgerät und dem Hostrechner über das Datennetz geeignete Programm nur Nachrichten zwischen dem Endgerät und dem Hostrechner über das Datennetz übermittelt, die mit zumindest einem Schlüssel (PIN; TAN) verschlüsselt sind.

16. Informationsübermittlungssystem nach Anspruch 1, dadurch gekennzeichnet, daß die Speichereinrichtung (3b', 3b") als einheitliche Baugruppe, vorzugsweise in einer Chipkarte ausgestaltet ist.

## Claims

1. An information transmission system for the transmission of information between at least one user of a data network via a terminal (1) of the user, which can be brought into a communication connection with the data network, and a host computer which is available in the data network, comprising
- a first storage means (3b', 3b") for accommodating at least one program and/or data with
--- an information transmission program (IUP),
--- an information decoding program (IEP) as well as
--- further information (INFO)) being included in the first storage means (3b', 3b"); and
- a computer unit (3a) which can be connected with the terminal (1) and which is adapted to access the first storage means (3b', 3b") in order to execute at least the information transmission program (IUP) by means of which the information decoding program (IEP) and/or the further information (INFO) are transmitted to the terminal (1),
- wherein the storage means comprises a write/read memory area (3b') and a read-only memory area (3b"), with the computer unit (3a) being adapted to access both memory areas,
characterized in that
- the information decoding program (IEP) is stored in the read-only memory area (3b") in the un and the information transmission program ({IUP}) as well as the further information ({INFO}) are stored in the coded form; and
- the computer unit (3a) is adapted to convert the coded information transmission program ({IUP}) and/or the further information ({INFO}) from the read-only memory area (3b") to a decoded executable first information transmissions program (IUP) or decoded information (INFO), respectively, in the write/read memory area (3b') by means of the information decoding program (IEP) and a code (PIN).

2. The information transmission system according to Claim 1, characterised in that the storage means (3b', 3b") and the computer unit (3a) are designed as a common assembly, preferably in a chip card.

3. The information transmission system according to Claim 1 or 2, characterised in that the computer unit is adapted to transmit information from the write/read memory area into a main memory of the terminal by means of the first information transmission program.

4. The information transmission system according to Claim 3, characterised in that the information to be transmitted from the write/read memory area into the main memory of the terminal comprises a communication program which is suited for the transmission of messages between the terminal and the host computer via the data network.

5. The information transmission system according to Claim 4, characterised in that the communication program is a program which can directly be executed by the computer unit of the terminal.

6. The information transmission system according to Claim 3, characterised in that information to be transmitted from the write/read memory area into the main memory of the terminal comprises an information decoding program and a coded communication program which, by means of an information decoding program and a code (PIN), can be converted to a program which can directly be executed by the computer unit of the terminal and which is suited for the transmission of messages between the terminal and the host computer via the data network.

7. The information transmission system according to Claim 3, characterised in that the information to be transmitted from the write/read memory area into the main memory of the terminal comprises a second communication program which can be executed by the computer unit of the terminal and which is suited for communication with a second storage means, in order to transmit information from the second storage means into the main memory of the terminal.

8. The information transmission system according to Claim 3, characterised in that the information to be transmitted from the write/read memory area into the main area of the terminal comprises an information decoding program and a coded communication program which can be converted by means of the information decoding program and a code (PIN) to a communication program which can directly be executed by the computer unit of the terminal, and which is suited for communication with the second storage means in order to transmit information from the second storage means into the main memory of the terminal.

9. The information transmission system according to Claim 7, characterised in that the information to be transmitted from the second storage means into the main memory of the terminal is a communication program which can directly be executed by the computer unit of the terminal and which is suited for the transmission of messages between the terminal and the host computer via the data network.

10. The information transmission system according to Claim 7, characterised in that the information to be transmitted from the second storage means into the main area of the terminal comprises an information decoding program which can be executed by the computer unit of the terminal as well as a coded communication program which, by means of an information decoding program and a code (PIN) is convertible to a communication program which can directly be executed by the computer unit of the terminal and which is suited for the transmission of messages between the terminal and the host computer via the data network.

11. The information transmission system according to one or several of the previous claims, characterised in that each program is checked for its identity and integrity prior to its transmission and/or execution.

12. The information transmission system according to Claim 11, characterised in that the check for identity and integrity of each program is accomplished by comparing its length, its cross sum over its entire length and/or its checksum over its entire length with corresponding predetermined values, with the corresponding predetermined values being preferably stored in the coded form in the first and/or the second storage means.

13. The information transmission system according to one or several of the previous claims, characterised in that each program upon the commencement of its execution ensures the complete check of all essential resources which are and/or can be connected with the computer unit which executes the program.

14. The information transmission system according to one or several of the previous claims, characterised in that each program upon the termination of its execution deletes at least considerable portions of itself and/or of data which has been stored in the course of its execution from the respective main memory or write/read memory.

15. The information transmission system according to one or several of the previous claims, characterised in that each program which is suited for the transmission of messages between the terminal and the host computer via the data network transmits those messages only between the terminal and the host computer via the data network which are coded by at least one code (PIN; TAN).

16. The information transmission system according to Claim 1, characterised in that the storage means (3b', 3b") and the computer unit (3a) are designed as a common assembly, preferably in a chip card.

## Revendications

1. Système de transmission d'informations pour transmettre des informations entre au moins un utilisateur d'un réseau de données par l'intermédiaire d'un terminal (1) de l'utilisateur pouvant être mis en communication avec le réseau de données et un ordinateur central disponible dans le réseau de données, comprenant
- un premier moyen de mémoire (3b', 3b'') destiné à enregistrer au moins un programme et / ou des données, dans lequel
-- sont contenus dans le premier moyen de mémoire (3b', 3b'')
--- un programme de transmission d'informations (IUP),
--- un programme de décodage d'informations (IEP), ainsi que
--- d'autres informations (INFO), et
- une unité de calcul (3a) pouvant être mise en communication avec le terminal (1) qui est conçue pour pouvoir accéder au premier moyen de mémoire (3b', 3b'') pour exécuter au moins le programme de transmission d'informations (IUP) avec lequel le programme de décodage d'informations (IEP) et / ou les autres informations (INFO) sont transmis au terminal (1),
- le moyen de mémoire présente une zone de mémoire d'écriture / de lecture (3b') et une zone de mémoire de lecture seule (3b"), l'unité de calcul (3a) étant conçue pour pouvoir accéder aux deux zones de mémoire,
caractérisé en ce que
- le programme de décodage d'informations (IEP) sous forme non codée et le programme de transmission d'informations ({IUP}) ainsi que les autres informations ({INFO}) sous forme codée sont stockés dans la zone de mémoire de lecture seule (3b''), et
- l'unité de calcul (3a) est conçue pour transcoder à l'aide du programme de décodage d'informations (IEP) et d'une clé (PIN) le programme de transmission d'informations codé ({IUP}) et / ou les autres informations ({INFO}) de la zone de mémoire de lecture seule (3b'') en un premier programme de transmission d'informations (IUP) décodé, exécutable, respectivement en des informations décodées (INFO) dans la zone de mémoire d'écriture / de lecture (3b').

2. Système de transmission d'informations selon la revendication 1, caractérisé en ce que le moyen de mémoire (3b', 3b'') et l'unité de calcul (3a) sont sous la forme d'un groupe constitutif indépendant, de préférence sous la forme d'une carte à puce.

3. Système de transmission d'informations selon la revendication 1 ou 2, caractérisé en ce que l'unité de calcul est conçue pour transmettre à l'aide du premier programme de transmission d'informations des informations de la zone de mémoire d'écriture / de lecture dans une mémoire de travail du terminal.

4. Système de transmission d'informations selon la revendication 3, caractérisé en ce que les informations à transmettre de la zone de mémoire d'écriture / de lecture dans la mémoire de travail du terminal présentent un programme de communication qui est approprié pour transmettre des messages entre le terminal et l'ordinateur central par l'intermédiaire du réseau de données.

5. Système de transmission d'informations selon la revendication 4, caractérisé en ce que le programme de communication est un programme pouvant être exécuté directement par l'unité de calcul du terminal.

6. Système de transmission d'informations selon la revendication 3, caractérisé en ce que l'information à transmettre de la zone de mémoire d'écriture / de lecture dans la mémoire de travail du terminal présente un programme de décodage d'informations et un programme de communication codé qui peut être transcodé à l'aide du programme de décodage d'informations et d'une clé (PIN) en un programme pouvant être exécuté directement par l'unité de calcul du terminal, qui est approprié pour transmettre des messages entre le terminal et l'ordinateur central par l'intermédiaire du réseau de données.

7. Système de transmission d'informations selon la revendication 3, caractérisé en ce que les informations à transmettre de la zone de mémoire d'écriture / de lecture dans la mémoire de travail du terminal présente un deuxième programme de communication pouvant être exécuté par l'unité de calcul du terminal, qui est approprié pour la communication avec un deuxième moyen de mémoire pour transmettre des informations du deuxième moyen de mémoire dans la mémoire de travail du terminal.

8. Système de transmission d'informations selon la revendication 3, caractérisé en ce que les informations à transférer de la zone de mémoire d'écriture / de lecture dans la mémoire de travail du terminal présente un programme de décodage d'informations et un programme de communication codé qui peut être converti à l'aide du programme de décodage d'informations et d'une clé (PIN) en un programme de communication pouvant être exécuté directement par l'unité de calcul du terminal, qui est approprié pour la communication avec le deuxième moyen de mémoire pour transférer des informations du deuxième moyen de mémoire dans la mémoire de travail du terminal.

9. Système de transmission d'informations selon la revendication 7, caractérisé en ce que les informations à transmettre du deuxième moyen de mémoire dans la mémoire de travail du terminal est un programme de communication pouvant être exécuté directement par l'unité de calcul du terminal, qui est approprié pour transmettre des messages entre le terminal et l'ordinateur central par l'intermédiaire du réseau de données.

10. Système de transmission d'informations selon la revendication 7, caractérisé en ce que les informations à transmettre du deuxième moyen de mémoire dans la mémoire de travail du terminal présentent un programme de décodage d'informations pouvant être exécuté par l'unité de calcul du terminal ainsi qu'un programme de communication codé qui peut être transcodé à l'aide du programme de décodage d'informations et d'une clé (PIN) en un programme de communication pouvant être exécuté directement par l'unité de calcul du terminal, qui est approprié pour la transmission de messages entre le terminal et l'ordinateur central par l'intermédiaire du réseau de données.

11. Système de transmission d'informations selon l'une ou plusieurs des revendications précédentes, caractérisé en ce que l'identité et l'intégrité de chaque programme est vérifiée avant son transfert et / ou son exécution.

12. Système de transmission d'informations selon la revendication 11, caractérisé en ce que la vérification de l'identité et de l'intégrité de chaque programme a lieu par comparaison de sa longueur, de sa somme transversale sur toute sa longueur et / ou de sa somme de contrôle sur toute sa longueur avec des valeurs prédéterminées correspondantes, les valeurs prédéterminées correspondantes étant enregistrées dans le premier et / ou le deuxième moyen de mémoire, de préférence sous forme codée.

13. Système de transmission d'informations selon l'une ou plusieurs des revendications précédentes, caractérisé en ce que chaque programme conserve, au début de son exécution, la maîtrise totale de toutes les ressources essentielles qui sont liées et / ou peuvent être liées à l'unité de calcul exécutant le programme.

14. Système de transmission d'informations selon l'une ou plusieurs des revendications précédentes, caractérisé en ce que chaque programme efface, à la fin de son exécution, au moins des parties essentielles de lui-même et / ou de données enregistrées au cours de son exécution de la mémoire de travail ou d'écriture / de lecture respective.

15. Système de transmission d'informations selon l'une ou plusieurs des revendications précédentes, caractérisé en ce que chaque programme approprié pour la transmission de messages entre le terminal et l'ordinateur central par l'intermédiaire du réseau de données ne transmet par le réseau de données entre le terminal et l'ordinateur central que des messages qui sont codés par au moins une clé (PIN; TAN).

16. Système de transmission d'informations selon la revendication 1, caractérisé en ce que le moyen de mémoire (3b', 3b'') est sous la forme d'un groupe constitutif indépendant, de préférence dans une carte à puce.
